# EUROPEAN PATENT APPLICATION

(11) **EP 4 792 950 A1**
(43) Date of publication of application: **19.08.2026**
(21) Application number: 24924460.9
(22) Date of filing: 21.05.2024
(51) Int. Cl.: B21D 28/02, B21C 51/00, B21D 43/02, G01N 21/95

(54) **DIE-CUTTING METHOD AND DIE-CUTTING MACHINE**

(30) Priority: 18.02.2024 CN 202410179510
(71) Applicant: Contemporary Amperex Technology Co., Limited, Ningde, Fujian 352100 (CN)
(72) Inventor: SONG, Shichuang, Ningde, Fujian 352100 (CN); TU, Yinhang, Ningde, Fujian 352100 (CN); JIA, Zixuan, Ningde, Fujian 352100 (CN)
(74) Representative: Ran, Handong
(86) International application number: PCT/CN2024/094454
(87) International publication number: WO 2025/171695

(57) **Abstract**

A die-cutting machine (10), comprising an unwinding mechanism (11), a cutting mechanism (12), a visual detection system (13) and a winding mechanism (14), which are sequentially arranged in a conveying direction of an electrode sheet, wherein the visual detection system is used for collecting an image of the current electrode sheet that has been cut, and the cutting mechanism is used for cutting the next electrode sheet in a first marking mode when a detection result of the current electrode sheet indicates that the current electrode sheet has a defect, the detection result of the current electrode sheet is determined on the basis of the image of the current electrode sheet, a cutting position corresponding to the next electrode sheet is used as an end position of the current battery electrode sheet section and a starting position of the next battery electrode sheet section, and the length between the starting position of the next battery electrode sheet section and a starting position of the current battery electrode sheet section is less than the length of one battery electrode sheet section. Further provided is a die-cutting method. The die-cutting machine shortens the length of an electrode sheet that does not meet standards, reduces the possibility of electrode sheet waste, and achieves the aim of saving on electrode sheets, thereby reducing the manufacturing cost of batteries, and improving the productivity of the device.

## Description

### CROSS-REFERENCE TO RELATED APPLICATIONS

The present disclosure is based on, and claims priority to, Chinese Patent Application No. 202410179510.3, filed on February 18, 2024 and entitled "Die-Cutting Method and Die-Cutting Machine", the entire content of which is hereby incorporated herein by reference.

### TECHNICAL FIELD

The present disclosure relates to, but is not limited to, the technical field of battery production, and in particular, to a die-cutting method and a die-cutting machine.

### BACKGROUND

In the related art, during battery production, a visual detection system is usually used to detect a defect (for example, metal exposure, cracking, etc.) of an electrode sheet that has been cut, and once the defect is detected, the electrode sheet with a length of one electrode sheet section needs to be scrapped, which leads to problems such as excessive material waste, increased battery manufacturing costs, and reduced equipment productivity.

### SUMMARY

Embodiments of the present disclosure provide a die-cutting method and a die-cutting machine.

The technical solutions of the embodiments of the present disclosure are implemented as follows:

An embodiment of the present disclosure provides a die-cutting machine, including an unwinding mechanism, a cutting mechanism, a visual detection system and a winding mechanism which are sequentially arranged in a conveying direction of an electrode sheet, where:
the unwinding mechanism is configured to release the electrode sheet;
the cutting mechanism is configured to cut the current electrode sheet released by the unwinding mechanism to form tabs;
the visual detection system is configured to collect an image of the current electrode sheet that has been cut;
the cutting mechanism is further configured to cut a next electrode sheet in a first marking mode when a detection result of the current electrode sheet indicates that the current electrode sheet has a defect, the detection result of the current electrode sheet is determined on the basis of the image of the current electrode sheet, a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section; and
the winding mechanism is configured to wind the current electrode sheet.

In the embodiment of the present disclosure, the die-cutting machine includes an unwinding mechanism, a cutting mechanism, a visual detection system and a winding mechanism which are sequentially arranged in a conveying direction of an electrode sheet, where the unwinding mechanism is configured to release the electrode sheet; the cutting mechanism is configured to cut the current electrode sheet released by the unwinding mechanism to form tabs; the visual detection system is configured to collect an image of the current electrode sheet that has been cut; the cutting mechanism is further configured to cut a next electrode sheet in a first marking mode when a detection result of the current electrode sheet indicates that the current electrode sheet has a defect, the detection result of the current electrode sheet is determined on the basis of the image of the current electrode sheet, a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section; and the winding mechanism is configured to wind the current electrode sheet. In this way, first, the defect of the electrode sheet is automatically detected, such that compared with manual detection, the cost of detection is reduced, and the detection efficiency and the degree of automation are improved. Secondly, when the visual detection system detects that the electrode sheet has the defect, the cutting mechanism is used to cut an end of the electrode sheet section in time, which achieves asynchronous reset re-cutting. On the one hand, compared with cutting the length of the entire electrode sheet section (that is, synchronous reset re-cutting), the length of an electrode sheet that does not meet standards is shortened, the possibility of electrode sheet waste is reduced, and the aim of saving on electrode sheets is achieved, thereby reducing the manufacturing cost of batteries, and improving the productivity of equipment. On the other hand, compared with adding a separate marking device for marking and/or adding a new detection system before the cutting mechanism for defect detection, the complexity of equipment is lowered while the cost of equipment is reduced. Finally, all electrode sheets that have been cut are wound in time by the winding mechanism, which improves the operational accuracy of the die-cutting machine and can meet the production requirements of high timeliness and high efficiency.

In some embodiments, the cutting mechanism is further configured to cut the next electrode sheet in the first marking mode on the basis of a received reset re-cutting signal when the detection result of the current electrode sheet indicates that the current electrode sheet has the defect; where the reset re-cutting signal is generated on the basis of the defect of the current electrode sheet.

In the embodiment of the present disclosure, on the one hand, the reset re-cutting signal is generated according to the defect of the electrode sheet, such that reset re-cutting is performed on the set defect, and the accuracy, timeliness and pertinence of the reset re-cutting signal are improved. On the other hand, the end of the electrode sheet section is marked in time according to the reset re-cutting signal, which improves the accuracy of marking.

In some embodiments, the cutting mechanism includes a first cutting device and a second cutting device, wherein the first cutting device is configured to cut a first edge of the current electrode sheet to form a tab, and cut a first edge of the next electrode sheet in the first marking mode when a distance between the defect of the current electrode sheet and the first edge of the current electrode sheet meets a distance condition; and the second cutting device is configured to cut a second edge of the current electrode sheet to form a tab, and cut a second edge of the next electrode sheet in the first marking mode when a distance between the defect of the current electrode sheet and the second edge of the current electrode sheet meets a distance condition, and the second edge of the current electrode sheet and the first edge of the current electrode sheet are arranged in a width direction of the electrode sheet.

In the embodiment of the present disclosure, on the one hand, different edges of the electrode sheet are cut by two independent cutting mechanisms, respectively, thereby reducing interference between each other. On the other hand, the corresponding cutting mechanism is selected according to the distance between the position of the defect and the edge of the electrode sheet to cut the end of the electrode sheet section, which improves the accuracy and pertinence of cutting, shortens the length of the electrode sheet that does not meet standards on the corresponding side, and thus improves the production efficiency while reducing the possibility of electrode sheet waste.

In some embodiments, the die-cutting machine includes a slitting mechanism and a marking mechanism, wherein the slitting mechanism is located between the cutting mechanism and the marking mechanism, and is configured to slit the current electrode sheet into a first part and a second part in a length direction of the electrode sheet; and the marking mechanism is located between the visual detection system and the winding mechanism, and is configured to mark the current electrode sheet in a second marking mode when the detection result of the current electrode sheet indicates that the current electrode sheet has the defect, and the second marking mode indicates that a battery electrode sheet section where the current electrode sheet is located is a defective battery electrode sheet section.

In the embodiment of the present disclosure, on the one hand, the slitting mechanism is integrated in the die-cutting machine to slit the electrode sheet after the tabs are cut, which improves the manufacturing efficiency of electrode sheets, thereby improving the production efficiency of equipment. On the other hand, the marking mechanism is used to mark the defective electrode sheet as an electrode sheet that does not meet standards in time, so as to accurately remove the electrode sheet section that does not meet standards subsequently.

In some embodiments, the slitting mechanism includes a slitting frame and a cutter located on the slitting frame; where the cutter on the slitting frame is configured to slit the current electrode sheet into the first part and the second part in the length direction of the electrode sheet.

In the embodiment of the present disclosure, a battery material strip is slit by the cutter on the slitting frame, thereby improving the accuracy of slitting.

In some embodiments, the die-cutting machine further includes an encoding device; where the encoding device is configured to send at least one output signal to a preset control device, such that the control device controls the marking mechanism to mark the current electrode sheet in the second marking mode on the basis of the at least one output signal.

In the embodiment of the present disclosure, the position of the electrode sheet is located by the signal output by the encoding device, which improves the accuracy of locating, thereby improving the accuracy of marking the defective electrode sheet, and further reducing the possibility of electrode sheet waste and the production cost of batteries.

In some embodiments, the marking mechanism includes a first marking mechanism and a second marking mechanism, and the winding mechanism includes a first winding mechanism and a second winding mechanism, where: the first marking mechanism is configured to mark the first part of the current electrode sheet in the second marking mode when the defect of the current electrode sheet is located at the first part of the current electrode sheet; the first winding mechanism is configured to wind the first part of the current electrode sheet; the second marking mechanism is configured to mark the second part of the current electrode sheet in the second marking mode when the defect of the current electrode sheet is located at the second part of the current electrode sheet; and the second winding mechanism is configured to wind the second part of the current electrode sheet.

In the embodiment of the present disclosure, on the one hand, the corresponding marking mechanism is selected according to the position of the defect to mark the electrode sheet section that does not meet standards, which improves the accuracy and pertinence of marking, thereby accurately removing the electrode sheet section that does not meet standards subsequently. On the other hand, different winding mechanisms are used to wind different parts of the electrode sheet in time, which improves the operational accuracy of the die-cutting machine and can meet the production requirements of high timeliness and high efficiency.

In some embodiments, the visual detection system includes a first image collection device, a second image collection device, a third image collection device and a fourth image collection device which are sequentially arranged in the conveying direction of the electrode sheet, and the visual detection system further includes a fifth image collection device and a sixth image collection device, where the first image collection device, the second image collection device, the third image collection device and the fourth image collection device are all located between the cutting mechanism and the slitting mechanism, and are configured to collect the image of the current electrode sheet that has been cut; the fifth image collection device is located between the slitting mechanism and the first marking mechanism, and is configured to collect an image of the first part of the current electrode sheet that has been slit; and the sixth image collection device is located between the slitting mechanism and the second marking mechanism, and is configured to collect an image of the second part of the current electrode sheet that has been slit.

In the embodiment of the present disclosure, on the one hand, multi-defect detection is performed on the same surface and/or different surfaces of the electrode sheet through images collected by different visual detection systems, thereby improving the comprehensiveness and accuracy of defect detection. On the other hand, the detection result of the electrode sheet is determined according to the image collected by each of the visual detection systems, thereby improving the accuracy of the detection result.

In some embodiments, the die-cutting machine further includes at least one of the following: a dust removal mechanism, a deviation correction mechanism, and a tension adjustment mechanism, where the dust removal mechanism is located between the marking mechanism and the tension adjustment mechanism, and is configured to remove dust on the current electrode sheet that has been cut; the deviation correction mechanism is located between the unwinding mechanism and the cutting mechanism, and/or located between the cutting mechanism and the slitting mechanism, and is configured to perform deviation correction on the current electrode sheet; and the tension adjustment mechanism is located between the dust removal mechanism and the winding mechanism, and is configured to adjust winding tension of the winding mechanism.

In the embodiment of the present disclosure, the mechanisms of various functions are integrated in the die-cutting equipment, such that the functions of the die-cutting machine are enriched, the die-cutting efficiency and quality are improved, and thus the versatility and adaptability of the die-cutting machine are enhanced.

In some embodiments, the dust removal mechanism includes a first dust removal mechanism and a second dust removal mechanism; where the first dust removal mechanism is located between the marking mechanism and the tension adjustment mechanism, and is configured to remove dust on a first surface of the current electrode sheet that has been cut; and the second dust removal mechanism is located between the marking mechanism and the tension adjustment mechanism, and is configured to remove dust on a second surface of the current electrode sheet that has been cut.

In the embodiment of the present disclosure, the first dust removal mechanism and the second dust removal mechanism are used to remove dust from different surfaces of the battery material strip, respectively, which improves the accuracy and comprehensiveness of dust removal, thereby reducing the possibility of poor battery performance caused by dust contamination on the material strip.

In some embodiments, the deviation correction mechanism includes a first deviation correction mechanism and a second deviation correction mechanism; where the first deviation correction mechanism is located between the unwinding mechanism and the cutting mechanism, and is configured to perform deviation correction on the current electrode sheet that is not cut; and the second deviation correction mechanism is located between the cutting mechanism and the slitting mechanism, and is configured to perform deviation correction on the current electrode sheet that is not slit.

In the embodiment of the present disclosure, deviation correction is performed on the material strip that is not cut and the material strip that is not slit in time, such that the possibility of uneven cutting and high rejection rate due to the deviation of the material strip is reduced.

An embodiment of the present disclosure provides a die-cutting method, including:
controlling a visual detection system of a die-cutting machine to collect an image of a current electrode sheet; where the die-cutting machine includes an unwinding mechanism, a cutting mechanism, the visual detection system and a winding mechanism which are sequentially arranged in a conveying direction of the electrode sheet;
determining a detection result of the current electrode sheet on the basis of the image of the current electrode sheet; and
controlling the cutting mechanism to cut a next electrode sheet in a first marking mode when the detection result of the current electrode sheet indicates that the current electrode sheet has a defect; where a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section.

In the embodiment of the present disclosure, first, the defect of the electrode sheet is automatically detected, such that compared with manual detection, the cost of detection is reduced, and the detection efficiency and the degree of automation are improved. Secondly, when the visual detection system detects that the electrode sheet has the defect, the cutting mechanism is used to cut an end of the electrode sheet section in time, which achieves asynchronous reset re-cutting. On the one hand, compared with cutting the length of the entire electrode sheet section (that is, synchronous reset re-cutting), the length of an electrode sheet that does not meet standards is shortened, the possibility of electrode sheet waste is reduced, and the aim of saving on electrode sheets is achieved, thereby reducing the manufacturing cost of batteries, and improving the productivity of equipment. On the other hand, compared with adding a separate marking device for marking and/or adding a new detection system before the cutting mechanism for defect detection, the complexity of equipment is lowered while the cost of equipment is reduced. Finally, all electrode sheets that have been cut are wound in time by the winding mechanism, which improves the operational accuracy of the die-cutting machine and can meet the production requirements of high timeliness and high efficiency.

In some embodiments, the visual detection system includes a plurality of image collection devices, and the image of the current electrode sheet includes an image of the current electrode sheet collected by each of the image collection devices; and the determining a detection result of the current electrode sheet on the basis of the image of the current electrode sheet includes: determining the detection result of the current electrode sheet on the basis of the image of the current electrode sheet collected by each of the image collection devices.

In the embodiment of the present disclosure, the detection result of the electrode sheet is determined according to the multiple images collected by the visual detection system, thereby improving the accuracy of the detection result.

In some embodiments, the controlling the cutting mechanism to cut a next electrode sheet in a first marking mode includes: generating a reset re-cutting signal on the basis of the defect of the current electrode sheet; and sending the reset re-cutting signal to the cutting mechanism, such that the cutting mechanism cuts the next electrode sheet in the first marking mode on the basis of the reset re-cutting signal.

In the embodiment of the present disclosure, on the one hand, the reset re-cutting signal is generated according to the defect of the electrode sheet, such that reset re-cutting is performed on the set defect, and the accuracy, timeliness and pertinence of the reset re-cutting signal are improved. On the other hand, the cutting mechanism marks the end of the electrode sheet section in time according to the reset re-cutting signal, which improves the accuracy of marking.

In some embodiments, the generating a reset re-cutting signal on the basis of the defect of the current electrode sheet includes: determining a target processing mode corresponding to the defect of the current electrode sheet by using a preset correspondence; where the correspondence indicates a relationship between at least one defect and at least one processing mode, and the at least one processing mode includes at least one of the following: alarm processing, shutdown processing, marking processing, and re-cutting processing; and generating the reset re-cutting signal when the target processing mode includes the re-cutting processing.

In the embodiment of the present disclosure, on the one hand, the target processing mode corresponding to the defect is determined according to the correspondence, thereby improving the accuracy and flexibility of the target processing mode. On the other hand, the reset re-cutting signal is generated only when the electrode sheet requires the re-cutting processing, which improves the pertinence of the re-cutting processing of the electrode sheet.

In some embodiments, the die-cutting method includes: displaying a configuration interface, where the configuration interface includes a configuration area, and the configuration area is used to configure the relationship between the at least one defect and the at least one processing mode; and determining the correspondence in response to a configuration operation performed in the configuration area.

In the embodiment of the present disclosure, the correspondence is configured through a visual interface, which simplifies the operation steps and improves the accuracy of the correspondence.

In some embodiments, the sending the reset re-cutting signal to the cutting mechanism, such that the cutting mechanism cuts the next electrode sheet in the first marking mode on the basis of the reset re-cutting signal, includes at least one of the following: when a distance between the defect of the current electrode sheet and a first edge of the current electrode sheet meets a distance condition, sending the reset re-cutting signal to a first cutting device in the cutting mechanism, such that the first cutting device cuts a first edge of the next electrode sheet in the first marking mode on the basis of the reset re-cutting signal; and when a distance between the defect of the current electrode sheet and a second edge of the current electrode sheet meets a distance condition, sending the reset re-cutting signal to a second cutting device in the cutting mechanism, such that the second cutting device cuts a second edge of the next electrode sheet in the first marking mode on the basis of the reset re-cutting signal; where the second edge of the current electrode sheet and the first edge of the current electrode sheet are arranged in a width direction of the electrode sheet.

In the embodiment of the present disclosure, first, different edges of the electrode sheet are cut by two independent cutting mechanisms, respectively, thereby reducing interference between each other. Secondly, the corresponding cutting mechanism is selected according to the distance between the position of the defect and the edge of the electrode sheet to cut the end of the electrode sheet section, which improves the accuracy and pertinence of cutting, shortens the length of the electrode sheet that does not meet standards on the corresponding side, and thus improves the production efficiency while reducing the possibility of electrode sheet waste. Finally, the end of the electrode sheet section is marked in time according to the reset re-cutting signal, which improves the accuracy of marking.

In some embodiments, the die-cutting method further includes: controlling a marking mechanism to mark the current electrode sheet in a second marking mode on the basis of the defect of the current electrode sheet; where the marking mechanism is located between the visual detection system and the winding mechanism, and the second marking mode indicates that a battery electrode sheet section where the current electrode sheet is located is a defective battery electrode sheet section.

In the embodiment of the present disclosure, the marking mechanism is used to mark the defective electrode sheet as an electrode sheet that does not meet standards in time, so as to accurately remove the electrode sheet section that does not meet standards subsequently.

In some embodiments, the controlling a marking mechanism to mark the current electrode sheet in a second marking mode on the basis of the defect of the current electrode sheet includes: determining a target processing mode corresponding to the defect of the current electrode sheet by using a preset correspondence; where the correspondence indicates a relationship between at least one defect and at least one processing mode, and the at least one processing mode includes at least one of the following: alarm processing, shutdown processing, marking processing, and re-cutting processing; and when the target processing mode includes the marking processing, controlling the marking mechanism to mark the current electrode sheet in the second marking mode.

In the embodiment of the present disclosure, on the one hand, the target processing mode corresponding to the defect is determined according to the correspondence, thereby improving the accuracy and flexibility of the target processing mode. On the other hand, marking is performed only when the electrode sheet requires the marking processing, which improves the pertinence of the marking processing of the electrode sheet.

In some embodiments, the controlling the marking mechanism to mark the current electrode sheet in the second marking mode includes at least one of the following: when the defect of the current electrode sheet is located at a first part of the current electrode sheet, controlling a first marking mechanism in the marking mechanism to mark the first part of the current electrode sheet in the second marking mode; and when the defect of the current electrode sheet is located at a second part of the current electrode sheet, controlling a second marking mechanism in the marking mechanism to mark the second part of the current electrode sheet in the second marking mode; where the first part of the current electrode sheet and the second part of the current electrode sheet are obtained by slitting the current electrode sheet in a length direction of the electrode sheet via a slitting mechanism of the die-cutting machine, and the slitting mechanism is located between the cutting mechanism and the marking mechanism.

In the embodiment of the present disclosure, on the one hand, the slitting mechanism is integrated in the die-cutting machine to slit the electrode sheet after the tabs are cut, which improves the manufacturing efficiency of electrode sheets, thereby improving the production efficiency of equipment. On the other hand, the corresponding marking mechanism is selected according to the position of the defect to mark the electrode sheet section that does not meet standards, which improves the accuracy and pertinence of marking, thereby accurately removing the electrode sheet section that does not meet standards subsequently.

It should be understood that the above-mentioned general description and the following detailed description are exemplary and explanatory, and do not limit the present disclosure.

### BRIEF DESCRIPTION OF THE DRAWINGS

The accompanying drawings herein are incorporated into the specification and constitute a part of the specification, and these accompanying drawings show embodiments consistent with the present disclosure and are used together with the specification to illustrate the technical solutions of the present disclosure.
FIG. 1 is a first schematic structural diagram of a die-cutting machine according to an embodiment of the present disclosure;
FIG. 2 is a schematic diagram of a cutting mechanism marking an electrode sheet according to an embodiment of the present disclosure;
FIG. 3 is a schematic structural diagram of a visual detection system according to an embodiment of the present disclosure;
FIG. 4 is a schematic diagram of defective electrode sheet marking according to an embodiment of the present disclosure;
FIG. 5 is a second schematic structural diagram of a die-cutting machine according to an embodiment of the present disclosure;
FIG. 6 is a third schematic structural diagram of a die-cutting machine according to an embodiment of the present disclosure;
FIG. 7 is a schematic flowchart of a die-cutting method according to an embodiment of the present disclosure;
FIG. 8 is a first schematic diagram of a configuration interface according to an embodiment of the present disclosure; and
FIG. 9 is a second schematic diagram of a configuration interface according to an embodiment of the present disclosure.

### DETAILED DESCRIPTION OF PREFERRED EMBODIMENTS

To make the objectives, technical solutions and advantages of the present disclosure clearer, the present disclosure will be further described in detail below with reference to the accompanying drawings, the described embodiments should not be construed as limiting the present disclosure, and all other embodiments obtained by those of ordinary skill in the art without creative efforts fall within the scope of protection of the present disclosure.

In the following description, reference is made to "some embodiments", which describe a subset of all possible embodiments, but it can be understood that "some embodiments" may be the same subset or different subsets of all possible embodiments, and may be combined with each other without conflict.

In the following description, the terms "first\second\third" referred to are used to distinguish similar objects and do not represent a specific order of the objects, and it can be understood that "first\second\third" can be interchanged in a specific order or sequence where allowed, such that the embodiments of the present disclosure described herein can be implemented in an order other than the order illustrated or described herein.

Unless otherwise defined, all technical and scientific terms used herein have the same meaning as commonly understood by those skilled in the art to which the present disclosure belongs. The terms used herein are merely for the purpose of describing the embodiments of the present disclosure and are not intended to limit the present disclosure.

In the related art, new energy batteries are becoming more and more widely used in life and industry. New energy batteries are not only used in energy storage power systems such as hydropower, thermal power, wind power, and solar power plants, but also widely used in electric vehicles such as electric bicycles, electric motorcycles, and electric cars, as well as aerospace and many other fields. As an application field of power batteries continues to expand, a market demand for power batteries continues to increase. The battery may be a battery cell. The battery cell refers to a basic unit that can implement mutual conversion between chemical energy and electrical energy, and can be used to manufacture a battery module or a battery pack, so as to supply power to an electrical device. The battery cell may be a secondary battery, which refers to a battery cell that may be continuously used by activating an active material by means of charging the battery cell after the battery cell is discharged. The battery cell may be a lithium-ion battery, a sodium-ion battery, a sodium-lithium ion battery, a lithium metal battery, a sodium metal battery, a lithium-sulfur battery, a magnesium-ion battery, a nickel-hydrogen battery, a nickel-cadmium battery, a lead storage battery, or the like. The battery may also be a single physical module that includes one or more battery cells for providing a higher voltage and capacity. When there are a plurality of battery cells, the plurality of battery cells are connected in series, in parallel, or in series-parallel via a busbar component. The electrode sheet is a main component of a single battery, and directly determines the electrochemical performance and safety of the battery.

The electrode sheet is a main component of a single battery, and directly determines the electrochemical performance and safety of the battery. The electrode sheet is composed of a metal current collector and a coating uniformly applied onto the metal current collector. The electrode sheet is conveyed in the form of a material roll in the manufacturing process to perform processes such as coating, rolling, and slitting on the battery electrode sheet.

In production equipment (for example, a die-cutting machine) during pre-processing of the battery cell, a visual detection system is usually used to detect a defect (for example, metal exposure, cracking, etc.) of an electrode sheet that has been cut, and once it is detected that the electrode sheet has the defect, a cutting mechanism still performs die-cutting on the entire electrode sheet section, a marking mechanism after the cutting mechanism marks an electrode sheet section that does not meet standards, and the electrode sheet with a length of the electrode sheet section needs to be scrapped subsequently, which leads to problems such as excessive material waste, increased battery manufacturing costs, and reduced equipment productivity.

An embodiment of the present disclosure provides a die-cutting machine. First, the defect of the electrode sheet is automatically detected, such that compared with manual detection, the cost of detection is reduced, and the detection efficiency and the degree of automation are improved. Secondly, when the visual detection system detects that the electrode sheet has the defect, the cutting mechanism is used to cut an end of the electrode sheet section in time, which achieves asynchronous reset re-cutting. On the one hand, compared with cutting the length of the entire electrode sheet section (that is, synchronous reset re-cutting), the length of an electrode sheet that does not meet standards is shortened, the possibility of electrode sheet waste is reduced, and the aim of saving on electrode sheets is achieved, thereby reducing the manufacturing cost of batteries, and improving the productivity of equipment. On the other hand, compared with adding a separate marking device for marking and/or adding a new detection system before the cutting mechanism for defect detection, the complexity of equipment is lowered while the cost of equipment is reduced. Finally, all electrode sheets that have been cut are wound in time by the winding mechanism, which improves the operational accuracy of the die-cutting machine and can meet the production requirements of high timeliness and high efficiency.

The method according to an embodiment of the present disclosure may be performed by a die-cutting machine, a control device, or the like. The die-cutting machine may be any suitable type of die-cutting equipment for any suitable scenario. In some embodiments, the die-cutting machine may include the control device. The control device may include, but is not limited to, at least one of a programmable logic controller (PLC), a host computer, a middle computer, a single-chip microcomputer, and the like. During implementation, the control device may further include a processor and a memory storing instructions executable by the processor, and when the instructions are executed by the processor, the method according to the embodiment of the present disclosure is implemented.

The technical solutions in the embodiments of the present disclosure will be clearly and completely described below with reference to the accompanying drawings in the embodiments of the present disclosure.

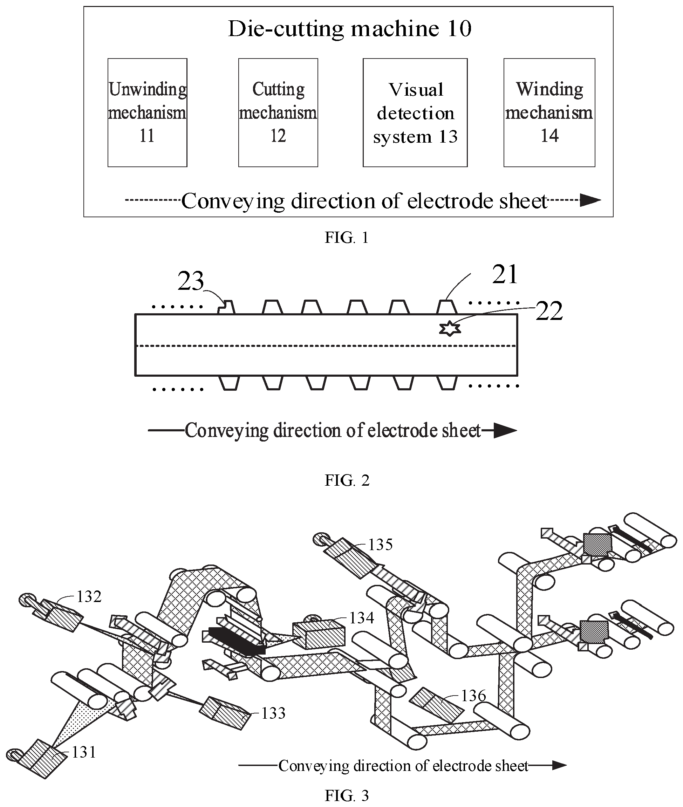

FIG. 1 is a first schematic structural diagram of a die-cutting machine according to an embodiment of the present disclosure. As shown in FIG. 1, the die-cutting machine 10 includes an unwinding mechanism 11, a cutting mechanism 12, a visual detection system 13 and a winding mechanism 14 which are sequentially arranged in a conveying direction of an electrode sheet, where:
the unwinding mechanism 11 is configured to release the electrode sheet;
the cutting mechanism 12 is configured to cut the current electrode sheet released by the unwinding mechanism to form tabs;
the visual detection system 13 is configured to collect an image of the current electrode sheet that has been cut;
the cutting mechanism 12 is further configured to cut a next electrode sheet in a first marking mode when a detection result of the current electrode sheet indicates that the current electrode sheet has a defect, the detection result of the current electrode sheet is determined on the basis of the image of the current electrode sheet, a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section; and
the winding mechanism 14 is configured to wind the current electrode sheet.

Here, the unwinding mechanism 11 may be any suitable mechanism capable of implementing an unwinding function. In some embodiments, the unwinding mechanism 11 may include an unwinding shaft, and the electrode sheet is wound around the unwinding shaft. During implementation, the unwinding shaft releases the electrode sheet when rotating about its central axis. In some embodiments, the unwinding mechanism 11 may further include a backup unwinding shaft and a roll-changing device. The backup unwinding shaft is configured to release a backup electrode sheet, and the roll-changing device is configured to automatically switch the unwinding shaft to the backup unwinding shaft, namely, pull a tail of the electrode sheet on the unwinding shaft to move to a head of the backup unwinding shaft for engagement. In this way, automatic roll-changing is achieved by the roll-changing device, which improves the roll-changing efficiency, thereby improving the working efficiency of the die-cutting machine.

The winding mechanism 14 may be any suitable mechanism capable of implementing a winding function. The number of winding mechanisms 14 may be at least one. In some embodiments, the number of winding mechanisms 14 matches the number of slit electrode sheets, and each winding mechanism 14 is configured to wind the corresponding electrode sheet. In some embodiments, the winding mechanism 14 may include a winding shaft, and the winding shaft winds the electrode sheet when rotating about its central axis. In some embodiments, the winding mechanism 14 further includes a backup winding roller and a tape splicing device for cutting off the unwound electrode sheet and winding it around the backup winding roller after the winding roller completes winding. In this way, automatic winding and splicing are implemented by the tape splicing device, which improves the winding efficiency, thereby improving the working efficiency of the die-cutting machine.

The visual detection system 13 may be any suitable system capable of image collection. The visual detection system 13 includes at least one image collection device, which may include, but is not limited to, a camera head, a camera, and the like. In some embodiments, the visual detection system 13 performs image collection on the basis of a collection instruction sent by the control device. In this way, compared with real-time collection, the number of collections is decreased, and the hardware consumption is reduced. During implementation, the control device may be located in the die-cutting machine, or may be independent of the die-cutting machine.

The detection result of the current electrode sheet may include, but is not limited to, a first detection result, a second detection result, and the like. The first detection result indicates that the current electrode sheet has a defect, and the second detection result indicates that the current electrode sheet has no defect. The defect of the electrode sheet may be a defect inherent to the electrode sheet, such as metal exposure, dark spots, dark traces, and cracking in a coated area, or may be a defect not inherent to the electrode sheet, such as tab burrs/damage/folding, straight-edge burrs/damage, and tape splicing. In some embodiments, the collected image is compared with a corresponding standard image to obtain the detection result of the current electrode sheet. In some embodiments, the image of the current electrode sheet may be recognized by any suitable neural network or model to obtain the detection result of the current electrode sheet. The neural network/model may be obtained by training with a training sample set. The training sample set may include sample images with different defects, sample images without defects, and the like.

The cutting mechanism 12 may be any suitable mechanism capable of implementing a cutting function. In some embodiments, the cutting mechanism 12 may include at least one cutting device, and different cutting devices are configured to cut different areas of the electrode sheet. The cutting device may include, but is not limited to, a cutter, a cutting head, and the like. For example, the cutting mechanism includes two cutting devices for cutting blank areas on two edges of the electrode sheet respectively to form tabs. For another example, the cutting device includes three cutting devices, where two cutting devices are configured to cut blank areas on two edges of the electrode sheet respectively to form tabs, and another cutting device is configured to cut a blank area in the middle of the electrode sheet to form a tab.

The cutting position corresponding to the next electrode sheet refers to a position where the next electrode sheet is cut in the first marking mode. The first marking mode may be any suitable marking mode. For example, the marking mode is a pattern, a cutting distance, a cutting mode, etc. For example, three non-equidistant tabs are cut continuously. For another example, only a part of the tab is cut. In some embodiments, a starting mark and an end mark of the electrode sheet section may also be cut in the first marking mode. During implementation, if the electrode sheet section has no defect, the starting mark and the end mark are respectively cut in the first marking mode according to the length of one normal electrode sheet section. If the electrode sheet section has the defect, the end mark is cut in advance in the first marking mode, such that the length between the starting mark and the end mark of the electrode sheet section is less than the length of one normal electrode sheet section, thereby reducing electrode sheet waste.

FIG. 2 is a schematic diagram of a cutting mechanism marking an electrode sheet according to an embodiment of the present disclosure. As shown in FIG. 2,

When the electrode sheet is conveyed to the cutting mechanism, the electrode sheet is normally cut by the cutting mechanism to form a first tab 21.

When the electrode sheet that has been cut is conveyed to the visual detection system, if the detection result of the electrode sheet indicates that the electrode has a defect 22, the cutting mechanism is used to cut the next electrode sheet in the first marking mode to form a second tab 23, where the second tab 23 is a part of the first tab 21, and a cutting position of the second tab 23 is used as the cutting position corresponding to the next electrode sheet.

In some embodiments, the cutting mechanism 12 is further configured to cut the next electrode sheet in the first marking mode on the basis of a received reset re-cutting signal when the detection result of the current electrode sheet indicates that the current electrode sheet has the defect; where the reset re-cutting signal is generated on the basis of the defect of the current electrode sheet.

Here, different defects may correspond to the same or different processing modes. During implementation, the processing mode corresponding to the defect may include at least one processing mode. The processing mode may include, but is not limited to, alarm processing, shutdown processing, marking processing, re-cutting processing, and the like. The alarm processing refers to reminding a staff to perform processing in time by means of a pop-up window, a prompt, or the like. The shutdown processing refers to shutting down the die-cutting machine. The marking processing refers to marking the electrode sheet. The re-cutting processing refers to marking the end mark of the electrode sheet section in advance.

In some embodiments, a correspondence between the defect and the processing mode may be pre-established, and then a corresponding target processing mode may be obtained according to the correspondence. During implementation, those skilled in the art may set the correspondence according to actual requirements, which is not limited in the embodiment of the present disclosure.

The reset re-cutting signal may be any suitable signal. The reset re-cutting signal is used to cut the end mark of the electrode sheet section in time. In some embodiments, when the control device determines that the processing mode corresponding to the defect of the current electrode sheet includes the re-cutting processing, the control device automatically generates the reset re-cutting signal and sends the reset re-cutting signal to the cutting mechanism, such that the cutting mechanism cuts the next electrode sheet in time in the first marking mode.

In the embodiment of the present disclosure, on the one hand, the reset re-cutting signal is generated according to the defect of the electrode sheet, such that reset re-cutting is performed on the set defect, and the accuracy, timeliness and pertinence of the reset re-cutting signal are improved. On the other hand, the end of the electrode sheet section is marked in time according to the reset re-cutting signal, which improves the accuracy of marking.

In some embodiments, the cutting mechanism 12 includes a first cutting device and a second cutting device, where the first cutting device is configured to cut a first edge of the current electrode sheet to form a tab, and cut a first edge of the next electrode sheet in the first marking mode when a distance between the defect of the current electrode sheet and the first edge of the current electrode sheet meets a distance condition; and the second cutting device is configured to cut a second edge of the current electrode sheet to form a tab, and cut a second edge of the next electrode sheet in the first marking mode when a distance between the defect of the current electrode sheet and the second edge of the current electrode sheet meets a distance condition, and the second edge of the current electrode sheet and the first edge of the current electrode sheet are arranged in a width direction of the electrode sheet.

Here, the distance condition may be any suitable condition. For example, the distance is less than a distance threshold. The distance threshold may be any suitable value, for example, half of the width of the electrode sheet.

In some embodiments, since the defect may be irregular, a first distance between a minimum bounding rectangle of the defect and an edge (including a first edge and a second edge) of the electrode sheet may be used as the distance between the defect and the edge of the electrode sheet. The first distance may refer to a distance between an edge of the electrode sheet and a set side (parallel to the edge) of the minimum bounding rectangle. The set side may include, but is not limited to, an upper side, a lower side, and a middle side (that is, a side corresponding to a midpoint between the upper side and the lower side). For example, if the distance between the first edge of the electrode sheet and the lower side of the minimum bounding rectangle is less than the distance threshold, and the distance between the second edge of the electrode sheet and the lower side of the minimum bounding rectangle is greater than the distance threshold, the first edge of the next electrode sheet is cut in the first marking mode. For another example, if the distance between the second edge of the electrode sheet and the lower side of the minimum bounding rectangle is less than the distance threshold, and the distance between the first edge of the electrode sheet and the lower side of the minimum bounding rectangle is greater than the distance threshold, the second edge of the next electrode sheet is cut in the first marking mode. For another example, if the distance between the first edge of the electrode sheet and the lower side of the minimum bounding rectangle is less than the distance threshold, and the distance between the second edge of the electrode sheet and the lower side of the minimum bounding rectangle is less than the distance threshold, the first edge of the next electrode sheet and the second edge of the next electrode sheet are cut in the first marking mode.

In the embodiment of the present disclosure, on the one hand, different edges of the electrode sheet are cut by two independent cutting mechanisms, respectively, thereby reducing interference between each other. On the other hand, the corresponding cutting mechanism is selected according to the distance between the position of the defect and the edge of the electrode sheet to cut the end of the electrode sheet section, which improves the accuracy and pertinence of cutting, shortens the length of the electrode sheet that does not meet standards on the corresponding side, and thus improves the production efficiency while reducing the possibility of electrode sheet waste.

In some embodiments, the die-cutting machine includes a slitting mechanism and a marking mechanism, wherein the slitting mechanism is located between the cutting mechanism and the marking mechanism, and is configured to slit the current electrode sheet into a first part and a second part in a length direction of the electrode sheet; and the marking mechanism is located between the visual detection system and the winding mechanism, and is configured to mark the current electrode sheet in a second marking mode when the detection result of the current electrode sheet indicates that the current electrode sheet has the defect, and the second marking mode indicates that a battery electrode sheet section where the current electrode sheet is located is a defective battery electrode sheet section.

Here, the slitting mechanism may be any suitable mechanism capable of implementing a slitting function. The number of slitting mechanisms may be at least one. In some embodiments, the number of slitting mechanisms matches the number of electrode sheet conveying lines, and each slitting mechanism is configured to slit the electrode sheet on the corresponding electrode sheet conveying line. In some embodiments, the slitting mechanism may include, but is not limited to, a slitting frame and at least one cutter located on the slitting frame, where the cutters are arranged at intervals in the length direction of the electrode sheet, and the electrode sheet may be slit into at least two parts. In this way, a battery material strip is slit by the cutter on the slitting frame, thereby improving the accuracy of slitting.

The marking mechanism may be any suitable mechanism capable of marking the electrode sheet, such as a laser marking machine, a color marking machine, and a pattern marking machine. The marking mechanism is configured to mark the battery electrode sheet section where the electrode sheet is located as an electrode sheet section that does not meet standards when the detection result of the current electrode sheet indicates that the electrode sheet has the defect. The number of marking mechanisms may be at least one. In some embodiments, when the current electrode sheet is conveyed to a marking range of the marking mechanism, the current electrode sheet is marked by the marking mechanism.

In some embodiments, the die-cutting machine further includes an encoding device; where the encoding device is configured to send at least one output signal to a preset control device, such that the control device controls the marking mechanism to mark the current electrode sheet on the basis of the at least one output signal.

Here, the encoding device may be any suitable device capable of implementing such function. For example, the encoding device is an encoder. The output signal may be a pulse signal, a square-wave signal, or the like. During implementation, the control device may calculate position information of the current electrode sheet according to the output signal sent by the encoding device, and control the marking mechanism to mark the current electrode sheet if the current electrode sheet is conveyed to the marking range of the marking mechanism. For example, if the current electrode sheet is 3 meters away from the marking mechanism, the encoding device outputs 1,000 pulse signals, and the running length of the electrode sheet is 0.5 meters, then, after the encoding device outputs 6,000 (1,000*3/0.5) pulse signals, it indicates that the current electrode sheet has been conveyed to the marking mechanism. At this time, the marking mechanism is controlled to mark the current electrode sheet. In this way, the position of the electrode sheet is located by the signal output by the encoding device, which improves the accuracy of locating, thereby improving the accuracy of marking the defective electrode sheet, and further reducing the possibility of electrode sheet waste and the production cost of batteries.

In the embodiment of the present disclosure, on the one hand, the slitting mechanism is integrated in the die-cutting machine to slit the electrode sheet after the tabs are cut, which improves the manufacturing efficiency of electrode sheets, thereby improving the production efficiency of equipment. On the other hand, the marking mechanism is used to mark the defective electrode sheet as an electrode sheet that does not meet standards in time, so as to accurately remove the electrode sheet section that does not meet standards subsequently.

In some embodiments, the visual detection system 13 includes a first image collection device, a second image collection device, a third image collection device and a fourth image collection device which are sequentially arranged in the conveying direction of the electrode sheet, and the visual detection system further includes a fifth image collection device and a sixth image collection device, where: the first image collection device, the second image collection device, the third image collection device and the fourth image collection device are all located between the cutting mechanism and the slitting mechanism, and are configured to collect the image of the current electrode sheet that has been cut; the fifth image collection device is located between the slitting mechanism and the first marking mechanism, and is configured to collect an image of the first part of the current electrode sheet that has been slit; and the sixth image collection device is located between the slitting mechanism and the second marking mechanism, and is configured to collect an image of the second part of the current electrode sheet that has been slit.

Here, the images collected by the respective image collection devices in the visual detection system may be used to detect different types of defects and/or defects on different surfaces of the electrode sheet. For example, the image collected by the first image collection device is used to detect whether there is metal exposure on a back surface of the electrode sheet; the image collected by the second image collection device is used to detect whether there is a defect in a coated area on the back surface of the electrode sheet; the image collected by the third image collection device is used to detect whether there is a defect in a coated area on a front surface of the electrode sheet; the image collected by the fourth image collection device is used to detect whether the formed tab has a defect; the image collected by the fifth image collection device is used to detect whether there is a defect on a front surface of the first part of the electrode sheet; and the image collected by the sixth image collection device is used to detect whether there is a defect on a front surface of the second part of the electrode sheet.

FIG. 3 is a schematic structural diagram of a visual detection system according to an embodiment of the present disclosure. As shown in FIG. 3, the visual detection system includes four cameras sequentially arranged in a conveying direction of an electrode sheet, namely, a first camera 131 (corresponding to the first image collection device), a second camera 132 (corresponding to the second image collection device), a third camera 133 (corresponding to the third image collection device), and a fourth camera 134 (corresponding to the fourth image collection device), and the visual detection system further includes a fifth camera 135 (corresponding to the fifth image collection device) and a sixth camera 136 (corresponding to the sixth image collection device), where:
the first camera 131 is configured to collect an image of the back surface of the electrode sheet that has been cut, and the image is used to perform metal exposure detection on the back surface of the electrode sheet;
the second camera 132 is configured to collect a back surface image of the electrode sheet that has been cut, and the back surface image is used to perform defect detection on the coated area on the back surface of the electrode sheet that has been cut;
the third camera 133 is configured to collect a front surface image of the electrode sheet that has been cut, and the front surface image is used to perform defect detection on the coated area on the front surface of the electrode sheet that has been cut;
the fourth camera 134 is configured to collect the front surface image of the electrode sheet that has been cut, and the image is used to perform defect detection on the tab of the electrode sheet that has been cut;
the fifth camera 135 is configured to collect a front surface image of the first part of the electrode sheet, and the front surface image is used to perform defect detection on the front surface (including a coated area and a non-coated area) of the first part of the electrode sheet that has been slit; and
the sixth camera 136 is configured to collect a front surface image of the second part of the electrode sheet, and the front surface image is used to perform defect detection on the front surface (including a coated area and a non-coated area) of the second part of the electrode sheet that has been slit.

In some embodiments, when the detection result determined on the basis of the image collected by the at least one image collection device is a first detection result, the first detection result is used as the detection result of the current electrode sheet; and when the detection result determined on the basis of the image collected by each image collection device is a second detection result, the second detection result is used as the detection result of the current electrode sheet.

In the embodiment of the present disclosure, on the one hand, multi-defect detection is performed on the same surface and/or different surfaces of the electrode sheet through images collected by different visual detection systems, thereby improving the comprehensiveness and accuracy of defect detection. On the other hand, the detection result of the electrode sheet is determined according to the image collected by each of the visual detection systems, thereby improving the accuracy of the detection result.

In some embodiments, the marking mechanism includes a first marking mechanism and a second marking mechanism, and the winding mechanism includes a first winding mechanism and a second winding mechanism; where: the first marking mechanism is configured to mark the first part of the current electrode sheet in the second marking mode when the defect of the current electrode sheet is located at the first part of the current electrode sheet; the first winding mechanism is configured to wind the first part of the current electrode sheet; the second marking mechanism is configured to mark the second part of the current electrode sheet in the second marking mode when the defect of the current electrode sheet is located at the second part of the current electrode sheet; and the second winding mechanism is configured to wind the second part of the current electrode sheet.

Here, when defect detection is performed on the current electrode sheet, whether the current electrode sheet has a defect, a position of the defect, and other information can be determined. During implementation, the first part of the current electrode sheet includes at least a first edge of the current electrode sheet, and the second part of the current electrode sheet includes at least a second edge of the current electrode sheet. Accordingly, if the distance between the defect and the first edge of the current electrode sheet meets the distance condition, it indicates that the defect is located at the first part; if the distance between the defect and the second edge of the current electrode sheet meets the distance condition, it indicates that the defect is located at the second part; and if both the distance between the defect and the first edge of the current electrode sheet and the distance between the defect and the second edge of the current electrode sheet meet the distance condition, it indicates that the defect is located at both the first part and the second part.

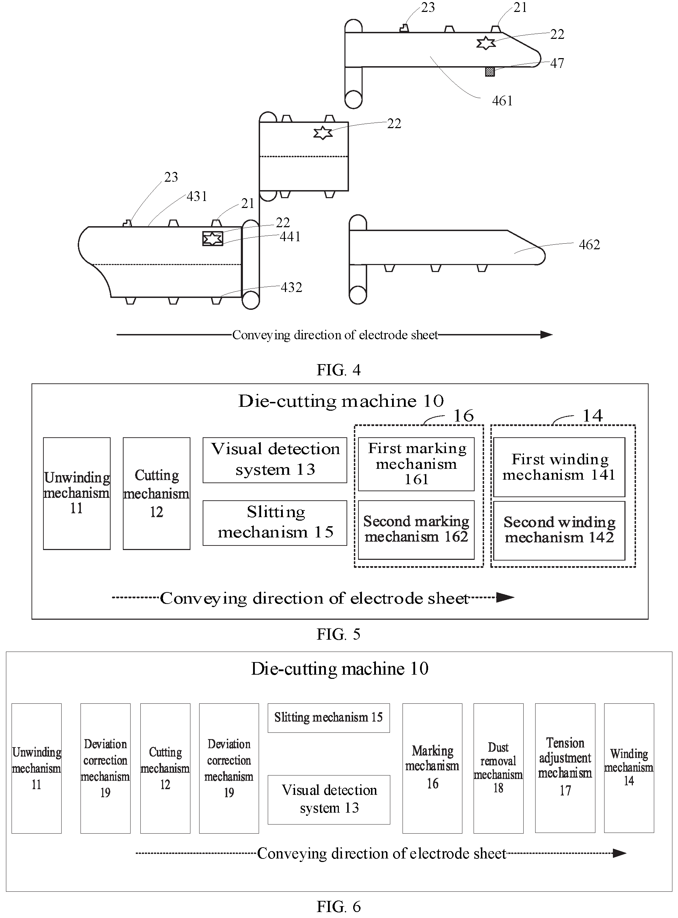

FIG. 4 is a schematic diagram of defective electrode sheet marking according to an embodiment of the present disclosure. As shown in FIG. 4,

When the electrode sheet is conveyed to the cutting mechanism, the electrode sheet is normally cut by the cutting mechanism to form a first tab 21.

When the electrode sheet that has been cut is conveyed to the visual detection system, if the detection result of the electrode sheet indicates that the electrode sheet has a defect 22, the distance between the first edge 431 of the electrode sheet and the lower side 441 of the minimum bounding rectangle of the defect 22 is less than the distance threshold, and the distance between the second edge 432 of the electrode sheet and the lower side 441 of the minimum bounding rectangle of the defect is greater than the distance threshold, the cutting mechanism is used to cut the first edge of the next electrode sheet in the first marking mode to form a second tab 23, where the second tab 23 is a part of the first tab 21.

When the electrode sheet that has been cut is conveyed to the slitting mechanism, the slitting mechanism divides the electrode sheet into a first part 461 and a second part 462 in the length direction.

Since the defect 22 is located at the first part 461, when the first part 461 of the electrode sheet is conveyed to the first marking mechanism, the first marking mechanism performs marking 47 at the defect 22.

FIG. 5 is a second schematic structural diagram of a die-cutting machine according to an embodiment of the present disclosure. As shown in FIG. 5, the die-cutting machine 10 includes an unwinding mechanism 11, a cutting mechanism 12, a visual detection system 13 and a winding mechanism 14 which are sequentially arranged in a conveying direction of an electrode sheet, and the die-cutting machine 10 further includes a slitting mechanism 15 located between the cutting mechanism 12 and the winding mechanism 14, and a marking mechanism 16 located between the visual detection system 13 and the winding mechanism 14, where:
when the electrode sheet unwound by the unwinding mechanism 11 is conveyed to the cutting mechanism 12, the cutting mechanism 12 cuts the electrode sheet to form tabs;
when the electrode sheet that has been cut is conveyed to the visual detection system 13, the visual detection system 13 collects an image of the current electrode sheet;
when a detection result determined on the basis of the image indicates that there is a defect, the cutting mechanism 12 cuts a next electrode sheet in a first marking mode on the basis of a received reset re-cutting signal;
when the current electrode sheet is conveyed to the slitting mechanism 15, the slitting mechanism 15 slits the current electrode sheet into a first part and a second part;
the marking mechanism 16 includes a first marking mechanism 161 and a second marking mechanism 162, and when the defect is located at the first part, if the first part is conveyed to the first marking mechanism 161, the first marking mechanism 161 marks the first part in a second marking mode; and/or when the defect is located at the second part, if the second part is conveyed to the second marking mechanism 162, the second marking mechanism 162 marks the second part in the second marking mode; and
the winding mechanism 14 includes a first winding mechanism 141 and a second winding mechanism 142, when the first part is conveyed to the first winding mechanism 141, the first winding mechanism 141 winds the first part, and when the second part is conveyed to the second winding mechanism 142, the second winding mechanism 142 winds the second part.

In the embodiment of the present disclosure, on the one hand, the corresponding marking mechanism is selected according to the position of the defect to mark the electrode sheet section that does not meet standards, which improves the accuracy and pertinence of marking, thereby accurately removing the electrode sheet section that does not meet standards subsequently. On the other hand, different winding mechanisms are used to wind different parts of the electrode sheet in time, which improves the operational accuracy of the die-cutting machine and can meet the production requirements of high timeliness and high efficiency.

In some embodiments, the die-cutting machine further includes at least one of the following: a dust removal mechanism, a deviation correction mechanism, and a tension adjustment mechanism, where the dust removal mechanism is located between the marking mechanism and the tension adjustment mechanism, and is configured to remove dust on the current electrode sheet that has been cut; the deviation correction mechanism is located between the unwinding mechanism and the cutting mechanism, and/or located between the cutting mechanism and the slitting mechanism, and is configured to perform deviation correction on the current electrode sheet; and the tension adjustment mechanism is located between the dust removal mechanism and the winding mechanism, and is configured to adjust winding tension of the winding mechanism.

Here, the dust removal mechanism may be any suitable mechanism capable of implementing a dust removal function, such as an air blowing device and a hairbrush. In some embodiments, there may be at least one dust removal mechanism, for example, one dust removal mechanism is respectively arranged on an A/B surface of the electrode sheet. For example, the dust removal mechanism includes a first dust removal mechanism and a second dust removal mechanism, where the first dust removal mechanism is located between the marking mechanism and the tension adjustment mechanism, and is configured to remove dust on a first surface of the current electrode sheet that has been cut, the second dust removal mechanism is located between the marking mechanism and the tension adjustment mechanism, and is configured to remove dust on a second surface of the current electrode sheet that has been cut, and the first surface and the second surface are different surfaces. In this way, the first dust removal mechanism and the second dust removal mechanism are used to remove dust from different surfaces of the battery material strip, respectively, which improves the accuracy and comprehensiveness of dust removal, thereby reducing the possibility of poor battery performance caused by dust contamination on the electrode sheet.

The deviation correction mechanism may be any suitable mechanism capable of implementing a deviation correction function. In some embodiments, the deviation correction mechanism may include, but is not limited to, a deviation correction component, a collection assembly, and the like, and the collection assembly may include, but is not limited to, a camera head, a range finder, and the like, and is configured to compare collected information of the electrode sheet with standard information to determine whether the electrode sheet has a deviation, and control, if the electrode sheet has the deviation, the deviation correction component to move until the information of the electrode sheet is consistent with the standard information. In some embodiments, there may be at least one deviation correction mechanism. For example, the deviation correction mechanism is located between the unwinding mechanism and the cutting mechanism, and is configured to perform deviation correction on the electrode sheet that is not cut. For another example, the deviation correction mechanism is located between the cutting mechanism and the slitting mechanism, and is configured to perform deviation correction on the electrode sheet that is not slit. For another example, the deviation correction mechanism includes a first deviation correction mechanism and a second deviation correction mechanism, where the first deviation correction mechanism is located between the unwinding mechanism and the cutting mechanism, and is configured to perform deviation correction on the current electrode sheet that is not cut, and the second deviation correction mechanism is located between the cutting mechanism and the slitting mechanism, and is configured to perform deviation correction on the current electrode sheet that is not slit. In this way, deviation correction is performed on the electrode sheet that is not cut and/or the electrode sheet that is not slit in time, such that the possibility of uneven cutting and high rejection rate due to the deviation of the electrode sheet is reduced.

The tension adjustment mechanism may be any suitable mechanism capable of implementing tension adjustment. In some embodiments, the number of tension adjustment mechanisms may be at least one. For example, the number of tension adjustment mechanisms matches the number of material strips slit by the slitting mechanism. In this way, the winding tension is adjusted in time by the tension adjustment mechanism, which reduces the possibility of electrode sheet wrinkling, barrel deformation, and uneven winding, etc.

In the embodiment of the present disclosure, the mechanisms of various functions are integrated in the die-cutting equipment, such that the functions of the die-cutting machine are enriched, the die-cutting efficiency and quality are improved, and thus the versatility and adaptability of the die-cutting machine are enhanced.

FIG. 6 is a third schematic structural diagram of a die-cutting machine according to an embodiment of the present disclosure. As shown in FIG. 6, the die-cutting machine 10 includes an unwinding mechanism 11, a cutting mechanism 12, a visual detection system 13 and a winding mechanism 14 which are sequentially arranged in a conveying direction of an electrode sheet of a battery, and the die-cutting machine 10 further includes a slitting mechanism 15, a marking mechanism 16, a tension adjustment mechanism 17, a dust removal mechanism 18 and a deviation correction mechanism 19, where:
the unwinding mechanism 11 is configured to release the electrode sheet;
the cutting mechanism 12 is configured to cut the current electrode sheet released by the unwinding mechanism 11 to form tabs;
the visual detection system 13 is configured to collect an image of the current electrode sheet that has been cut;
the cutting mechanism 12 is further configured to cut a next electrode sheet in a first marking mode when a detection result of the current electrode sheet indicates that the current electrode sheet has a defect;
the slitting mechanism 15 is located between the cutting mechanism 12 and the winding mechanism 14, and is configured to slit the current electrode sheet in a length direction of the electrode sheet to form a plurality of electrode sheets (corresponding to a first part and a second part of the current electrode sheet);
the marking mechanism 16 is located between the visual detection system 13 and the winding mechanism 14, and is configured to mark the current electrode sheet in a second marking mode when the detection result of the current electrode sheet indicates that the current electrode sheet has the defect;
the dust removal mechanism 18 is located between the marking mechanism 16 and the tension adjustment mechanism 17, and is configured to remove dust from the electrode sheet that has been slit;
There are two deviation correction mechanisms 19, where one deviation correction mechanism is located between the unwinding mechanism 11 and the cutting mechanism 12, and is configured to perform deviation correction on the electrode sheet that is not cut; the other deviation correction mechanism is located between the cutting mechanism 12 and the slitting mechanism 15, and is configured to perform deviation correction on the electrode sheet that is not slit; and
the tension adjustment mechanism 17 is located between the dust removal mechanism 18 and the winding mechanism 14, and is configured to adjust winding tension of the winding mechanism 14.

In the embodiment of the present disclosure, first, the defect of the electrode sheet is automatically detected, such that compared with manual detection, the cost of detection is reduced, and the detection efficiency and the degree of automation are improved. Secondly, when the visual detection system detects that the electrode sheet has the defect, the cutting mechanism is used to cut an end of the electrode sheet section in time, which achieves asynchronous reset re-cutting. On the one hand, compared with cutting the length of the entire electrode sheet section (that is, synchronous reset re-cutting), the length of an electrode sheet that does not meet standards is shortened, the possibility of electrode sheet waste is reduced, and the aim of saving on electrode sheets is achieved, thereby reducing the manufacturing cost of batteries, and improving the productivity of equipment. On the other hand, compared with adding a separate marking device for marking and/or adding a new detection system before the cutting mechanism for defect detection, the complexity of equipment is lowered while the cost of equipment is reduced. Finally, all electrode sheets that have been cut are wound in time by the winding mechanism, which improves the operational accuracy of the die-cutting machine and can meet the production requirements of high timeliness and high efficiency.

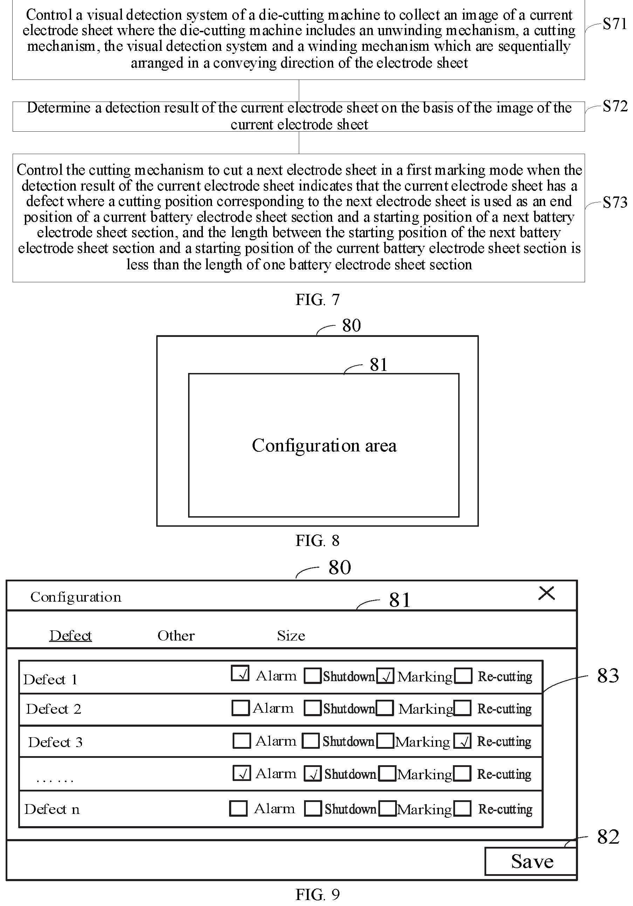

FIG. 7 is a schematic flowchart of a die-cutting method according to an embodiment of the present disclosure. The die-cutting method is applied to a control device. As shown in FIG. 7, the die-cutting method includes step S71 to step S73.

In step S71, a visual detection system of a die-cutting machine is controlled to collect an image of a current electrode sheet. The die-cutting machine includes an unwinding mechanism, a cutting mechanism, the visual detection system and a winding mechanism which are sequentially arranged in a conveying direction of the electrode sheet.

Here, the control device may be any suitable device, which is, for example, a host computer, a PLC, a combination of the host computer and the PLC, etc. During implementation, the control device may be located in the die-cutting machine, or may be independent of the die-cutting machine. The control device is in communication connection with the die-cutting machine. The die-cutting machine may be any of the die-cutting machines described above.

The visual detection system includes at least one image collection device, which may include, but is not limited to, a camera head, a camera, and the like. For example, the visual detection system includes four camera heads, and different camera heads have different lighting modes for detecting different defects of the electrode sheet. For example, a die-cutting backlight camera adopts a backlight mode for lighting, and can detect defects such as tab size/folding/damage, and edge damage/holes of the electrode sheet; and a die-cutting camera adopts a light source and a camera for lighting a coated area to detect defects such as metal exposure, wrinkles, decarburization, and scratches in the coated area on a front surface of the electrode sheet.

In some embodiments, the control device sends a collection instruction to the visual detection system, such that the visual detection system collects the image of the current electrode sheet on the basis of the collection instruction. In this way, compared with real-time collection, the number of collections is decreased, and the hardware consumption is reduced.

The current electrode sheet refers to an electrode sheet on an unwinding shaft that is conveyed to a collection position of the visual detection system in the conveying direction of the electrode sheet.

In step S72, a detection result of the current electrode sheet is determined on the basis of the image of the current electrode sheet.

Here, the detection result of the current electrode sheet may include, but is not limited to, a first detection result, a second detection result, and the like. The first detection result indicates that the current electrode sheet has a defect, and the second detection result indicates that the current electrode sheet has no defect. The defect of the electrode sheet may be a defect inherent to the electrode sheet, such as metal exposure, dark spots, dark traces, and cracking in a coated area, or may be a defect not inherent to the electrode sheet, such as tab burrs/damage/folding, straight-edge burrs/damage, and tape splicing.

In some embodiments, the collected image is compared with a corresponding standard image to obtain the detection result of the current electrode sheet. In some embodiments, the image of the current electrode sheet may be recognized by any suitable neural network or model to obtain the detection result of the current electrode sheet. The neural network/model may be obtained by training with a training sample set. The training sample set may include sample images with different defects, sample images without defects, and the like.

In some embodiments, the visual detection system includes a plurality of image collection devices. During implementation, the control device determines the detection result of the current electrode sheet on the basis of the image of the current electrode sheet collected by each image collection device. In some embodiments, when the detection result determined on the basis of the image of the current electrode sheet collected by the at least one image collection device is a first detection result, the first detection result is used as the detection result of the current electrode sheet; and when the detection result determined on the basis of the image of the current electrode sheet collected by each image collection device is a second detection result, the second detection result is used as the detection result of the current electrode sheet. In this way, the detection result of the electrode sheet is determined according to the multiple images collected by the visual detection system, thereby improving the accuracy of the detection result.

In step S73, the cutting mechanism is controlled to cut a next electrode sheet in a first marking mode when the detection result of the current electrode sheet indicates that the current electrode sheet has a defect; where a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section.

Here, the next electrode sheet refers to an electrode sheet on an unwinding shaft that is conveyed to the cutting mechanism in the conveying direction of the electrode sheet. The next electrode sheet is an electrode sheet after the current electrode sheet.

The cutting position corresponding to the next electrode sheet refers to a position where the next electrode sheet is cut in the first marking mode. The first marking mode may be any suitable marking mode. For example, the marking mode is a pattern, a cutting distance, a cutting mode, etc. For example, only a part of a tab is cut. In some embodiments, a starting mark and an end mark of the electrode sheet section may also be cut in the first marking mode. In some embodiments, the starting mark and the end mark of the electrode sheet section may be the same or different. For example, the starting mark of the electrode sheet section is that the corresponding tab lacks an upper right corner, and the end mark of the electrode sheet section may be that the corresponding tab lacks an upper left corner. For another example, neither the starting mark nor the end mark of the electrode sheet section is that the corresponding tab lacks the upper left corner.

The starting position of the current battery electrode sheet section may be the current electrode sheet, or may be an electrode sheet before the current electrode sheet.

In some embodiments, the control device sends a reset re-cutting signal to the cutting mechanism, such that the cutting mechanism marks the next electrode sheet in the first marking mode on the basis of the reset re-cutting signal. The reset re-cutting signal may be any suitable signal. The reset re-cutting signal is used to cut the end mark of the electrode sheet section in time.

In some embodiments, different defects correspond to the same or different processing modes. The processing mode may include, but is not limited to, alarm processing, shutdown processing, marking processing, re-cutting processing, and the like. During implementation, when the processing mode corresponding to the defect is the re-cutting processing, the control device generates the reset re-cutting signal.

In the embodiment of the present disclosure, first, the defect of the electrode sheet is automatically detected, such that compared with manual detection, the cost of detection is reduced, and the detection efficiency and the degree of automation are improved. Secondly, when the visual detection system detects that the electrode sheet has the defect, the cutting mechanism is used to cut an end of the electrode sheet section in time, which achieves asynchronous reset re-cutting. On the one hand, compared with cutting the length of the entire electrode sheet section (that is, synchronous reset re-cutting), the length of an electrode sheet that does not meet standards is shortened, the possibility of electrode sheet waste is reduced, and the aim of saving on electrode sheets is achieved, thereby reducing the manufacturing cost of batteries, and improving the productivity of equipment. On the other hand, compared with adding a separate marking device for marking and/or adding a new detection system before the cutting mechanism for defect detection, the complexity of equipment is lowered while the cost of equipment is reduced. Finally, all electrode sheets that have been cut are wound in time by the winding mechanism, which improves the operational accuracy of the die-cutting machine and can meet the production requirements of high timeliness and high efficiency.

In some embodiments, the step S73 of "controlling the cutting mechanism to cut a next electrode sheet in a first marking mode" includes step 731 and step 732.

In step S731, a reset re-cutting signal is generated on the basis of the defect of the current electrode sheet.

Here, different defects may correspond to the same or different processing modes. During implementation, the processing mode corresponding to the defect may include at least one processing mode. The processing mode may include, but is not limited to, alarm processing, shutdown processing, marking processing, re-cutting processing, and the like. During implementation, when the processing mode corresponding to the defect is the re-cutting processing, the reset re-cutting signal is generated.

In some embodiments, a correspondence between the defect and the processing mode may be pre-established, and then a target processing mode corresponding to the defect of the current electrode sheet may be obtained according to the correspondence. In some embodiments, the correspondence may be established in any suitable manner such as a configuration file or a configuration interface.

In some embodiments, the step 731 includes step 7311 and step 7312.

In step S7311, a target processing mode corresponding to the defect of the current electrode sheet is determined by using a preset correspondence.

Here, the correspondence indicates a relationship between at least one defect and at least one processing mode. The processing mode may include, but is not limited to, at least one of alarm processing, shutdown processing, marking processing, re-cutting processing, and the like. During implementation, the target processing mode corresponding to the defect of the current electrode sheet can be determined through the correspondence, where the target processing mode may include at least one processing mode, for example, the target processing mode may include marking processing and re-cutting processing.

In step S7312, the reset re-cutting signal is generated when the target processing mode includes the re-cutting processing.

Here, the reset re-cutting signal may be any suitable signal. In some embodiments, the reset re-cutting signal may be the same as or different from a signal of the starting mark of the electrode sheet section. During implementation, when the control device determines that the processing mode corresponding to the defect of the current electrode sheet includes the re-cutting processing, the reset re-cutting signal is automatically generated.

In this way, on the one hand, the target processing mode corresponding to the defect is determined according to the correspondence, thereby improving the accuracy and flexibility of the target processing mode. On the other hand, the reset re-cutting signal is generated only when the electrode sheet requires the re-cutting processing, which improves the pertinence of the re-cutting processing of the electrode sheet.

In step S732, the reset re-cutting signal is sent to the cutting mechanism, such that the cutting mechanism cuts the next electrode sheet in the first marking mode on the basis of the reset re-cutting signal.

Here, the control device may be in direct communication connection with the cutting mechanism. During implementation, the cutting mechanism may cut the next electrode sheet with reference to the foregoing embodiment.

In some embodiments, the step 732 includes step 7321 and/or step 7322.

In step S7321, when a distance between the defect of the current electrode sheet and a first edge of the current electrode sheet meets a distance condition, the reset re-cutting signal is sent to a first cutting device in the cutting mechanism, such that the first cutting device cuts a first edge of the next electrode sheet in the first marking mode on the basis of the reset re-cutting signal.

Here, the first cutting device may include, but is not limited to, a cutter, a cutting head, and the like. The first cutting device is configured to cut a blank area on the first edge of the electrode sheet to form a tab.

The distance condition may be any suitable condition. For example, the distance is less than a distance threshold. The distance threshold may be any suitable value, for example, half of the width of the electrode sheet.

In some embodiments, since the defect may be irregular, a first distance between a minimum bounding rectangle of the defect and a first edge of the electrode sheet may be used as the distance between the defect and the first edge of the electrode sheet. The first distance may refer to a distance between a first edge of the electrode sheet and a set side (parallel to the first edge) of the minimum bounding rectangle. The set side may include, but is not limited to, an upper side, a lower side, and a middle side. For example, if the distance between the first edge of the electrode sheet and the lower side of the minimum bounding rectangle is less than the distance threshold, the reset re-cutting signal is sent to the first cutting device.

In step S7322, when a distance between the defect of the current electrode sheet and a second edge of the current electrode sheet meets a distance condition, the reset re-cutting signal is sent to a second cutting device in the cutting mechanism, such that the second cutting device cuts a second edge of the next electrode sheet in the first marking mode on the basis of the reset re-cutting signal; where the second edge of the current electrode sheet and the first edge of the current electrode sheet are arranged in a width direction of the electrode sheet.

Here, the second cutting device may include, but is not limited to, a cutter, a cutting head, and the like. The second cutting device is configured to cut a blank area on the second edge of the electrode sheet to form a tab.

During implementation, since the defect may be irregular, a first distance between a minimum bounding rectangle of the defect and a second edge of the electrode sheet may be used as the distance between the defect and the second edge of the electrode sheet. The second distance may refer to a distance between a second edge of the electrode sheet and a set side (parallel to the second edge) of the minimum bounding rectangle. The set side may include, but is not limited to, an upper side, a lower side, and a middle side. For example, if the distance between the second edge of the electrode sheet and the lower side of the minimum bounding rectangle is less than the distance threshold, the reset re-cutting signal is sent to the second cutting device.

In this way, first, different edges of the electrode sheet are cut by two independent cutting mechanisms, respectively, thereby reducing interference between each other. Secondly, the corresponding cutting mechanism is selected according to the distance between the position of the defect and the edge of the electrode sheet to cut the end of the electrode sheet section, which improves the accuracy and pertinence of cutting, shortens the length of the electrode sheet that does not meet standards on the corresponding side, and thus improves the production efficiency while reducing the possibility of electrode sheet waste. Finally, the end of the electrode sheet section is marked in time according to the reset re-cutting signal, which improves the accuracy of marking.

In the embodiment of the present disclosure, the reset re-cutting signal is generated on the basis of the defect of the current electrode sheet; and the reset re-cutting signal is sent to the cutting mechanism, such that the cutting mechanism cuts the next electrode sheet in the first marking mode on the basis of the reset re-cutting signal. In this way, on the one hand, the reset re-cutting signal is generated according to the defect of the electrode sheet, such that reset re-cutting is performed on the set defect, and the accuracy, timeliness and pertinence of the reset re-cutting signal are improved. On the other hand, the cutting mechanism marks the end of the electrode sheet section in time according to the reset re-cutting signal, which improves the accuracy of marking.

In some embodiments, the die-cutting method further includes step S74.

In step S74, a marking mechanism is controlled to mark the current electrode sheet in a second marking mode on the basis of the defect of the current electrode sheet.

Here, the second marking mode indicates that a battery electrode sheet section where the current electrode sheet is located is a defective battery electrode sheet section. The marking mechanism may be any suitable mechanism capable of marking the electrode sheet, such as a laser marking machine, a color marking machine, and a pattern marking machine. In some embodiments, there may be at least one marking mechanism. For example, a yellow mark is marked by the marking mechanism to indicate that the battery electrode sheet section where the current electrode sheet is located is a battery electrode sheet section that does not meet standards.

In some embodiments, the step 74 includes step 741 and step 742.

In step S741, a target processing mode corresponding to the defect of the current electrode sheet is determined by using a preset correspondence.

Here, the correspondence indicates a relationship between at least one defect and at least one processing mode. During implementation, the target processing mode corresponding to the defect may be determined with reference to the foregoing step 7311.

In step S742, when the target processing mode includes the marking processing, the marking mechanism is controlled to mark the current electrode sheet in the second marking mode.

Here, if the target processing mode includes the marking processing, the control device generates the marking signal and sends the marking signal to the marking mechanism, such that the marking mechanism marks the current electrode sheet in the second marking mode on the basis of the marking signal. The marking signal may be any suitable signal. The marking signal is used to mark the electrode sheet section as an electrode sheet section that does not meet standards in time.

In some embodiments, the control device locates a position of the current electrode sheet on the basis of at least one output signal sent by the encoding device, and sends the marking signal to the marking mechanism when the current electrode sheet is conveyed to a marking range of the marking mechanism, such that the marking mechanism marks the current electrode sheet in time.

In this way, on the one hand, the target processing mode corresponding to the defect is determined according to the correspondence, thereby improving the accuracy and flexibility of the target processing mode. On the other hand, marking is performed only when the electrode sheet requires the marking processing, which improves the pertinence of the marking processing of the electrode sheet.

In some embodiments, the step S74 includes step 743 and/or step 744.

In step S743, when the defect of the current electrode sheet is located at a first part of the current electrode sheet, a first marking mechanism in the marking mechanism is controlled to mark the first part of the current electrode sheet in the second marking mode.

Here, when performing defect detection on the basis of the image of the current electrode sheet, the control device can determine whether the current electrode sheet has a defect, a position of the defect, and other information.

The first part of the current electrode sheet includes at least a first edge of the current electrode sheet, and if the distance between the defect and the first edge of the current electrode sheet meets the distance condition, it indicates that the defect is located at the first part. During implementation, the control device may directly communicate with the first marking mechanism, and the control device may send the marking signal to the first marking mechanism, such that the first marking mechanism marks the first part of the current electrode sheet in the second marking mode.

In step S744, when the defect of the current electrode sheet is located at a second part of the current electrode sheet, a second marking mechanism in the marking mechanism is controlled to mark the second part of the current electrode sheet in the second marking mode.

Here, the second part of the current electrode sheet includes at least a second edge of the current electrode sheet, and if the distance between the defect and the second edge of the current electrode sheet meets the distance condition, it indicates that the defect is located at the second part. During implementation, the control device may directly communicate with the second marking mechanism, and the control device may send the marking signal to the second marking mechanism, such that the second marking mechanism marks the second part of the current electrode sheet in the second marking mode.

In this way, the corresponding marking mechanism is selected according to the position of the defect to mark the electrode sheet section that does not meet standards, which improves the accuracy and pertinence of marking, thereby accurately removing the electrode sheet section that does not meet standards subsequently.

In the embodiment of the present disclosure, the marking mechanism is controlled to mark the current electrode sheet in the second marking mode on the basis of the defect of the current electrode sheet. In this way, the marking mechanism is used to mark the defective electrode sheet as an electrode sheet that does not meet standards in time, so as to accurately remove the electrode sheet section that does not meet standards subsequently.

In some embodiments, the die-cutting method further includes step 751 and step 752.

In step S751, a configuration interface is displayed, where the configuration interface includes a configuration area, and the configuration area is used to configure the relationship between the at least one defect and the at least one processing mode.

Here, the configuration interface is an interaction interface for configuration operation and information display. The configuration interface may include, but is not limited to, an area available for configuration operation, an operation control, and the like. The area available for configuration operation may include, but is not limited to, at least one of an area for configuring a defect and a processing mode, an area for configuring a size, an area for configuring other information, and the like. During implementation, those skilled in the art may determine the number of areas available for configuration operation in the configuration interface and a specific layout of each area available for configuration operation in the configuration interface according to actual situations, which is not limited in the embodiment of the present disclosure.

The operation control may be any suitable operable control. For example, the control is an edit control, a new control, a save control, or the like. During implementation, those skilled in the art may determine the number of operation controls and a position of each operation control in the configuration interface according to actual situations, which is not limited in the embodiment of the present disclosure.

The configuration area is used to configure at least the defect and the processing mode. In some embodiments, the configuration area may also configure the size and the processing mode, and configure other information.

The configuration interface may be displayed on any suitable electronic device having an interface interaction function, for example, the configuration interface may be displayed on a notebook computer, a mobile phone, a tablet computer, a handheld computer, a personal digital assistant, a digital television, or a desktop computer. During implementation, the electronic device that displays the configuration interface may be the same as or different from an electronic device that performs the die-cutting method, which is not limited herein.

FIG. 8 is a first schematic diagram of a configuration interface according to an embodiment of the present disclosure. As shown in FIG. 8, the configuration interface 80 includes a configuration area 81, and the configuration area 81 is used to configure different defects and corresponding processing modes.

In step S752, the correspondence is determined in response to a configuration operation performed in the configuration area.

Here, a correspondence between each defect and a corresponding processing mode is generated according to the configuration operation. The processing mode corresponding to each defect may include at least one processing mode. During implementation, different defects may correspond to the same or different processing modes.

FIG. 9 is a second schematic diagram of a configuration interface according to an embodiment of the present disclosure. As shown in FIG. 9, the configuration interface 80 includes a configuration area 81 and a save control 82, where the configuration area 81 includes a list 83, the list 83 displays at least one defect and at least one processing mode, and the configuration area 81 may further configure the size and the processing mode, and configure other information. The save control 82 is configured to save each defect and the corresponding processing mode in the list 83.

In the embodiment of the present disclosure, the correspondence is configured through a visual interface, which simplifies the operation steps and improves the accuracy of the correspondence.

It should be understood that the reference to "one embodiment" or "an embodiment" throughout the specification means that a specific feature, structure, or characteristic related to the embodiment is included in at least one embodiment of the present disclosure. Therefore, the phrase "in one embodiment" or "in an embodiment" appearing throughout the specification does not necessarily refer to the same embodiment. In addition, these specific features, structures, or characteristics may be combined in one or more embodiments in any suitable manner. It should be understood that in various embodiments of the present disclosure, the sequence of the serial numbers of the above processes do not mean the order of execution. The order of execution of the processes should be determined based on their functions and internal logic, and should not constitute any limitation on the implementation processes of the embodiments of the present disclosure. The serial numbers of the above embodiments of the present disclosure are for description and do not represent the advantages or disadvantages of the embodiments. It is to be noted that herein, the term "include", "comprise", or any other variation thereof is intended to cover a non-exclusive inclusion, so that a process, method, article, or device including a series of elements not only includes those elements, but also includes other elements not expressly listed or elements inherent to such process, method, article, or device. Without further limitations, an element defined by the phrase "includes one..." does not exclude the presence of additional identical elements in the process, method, material, or device including the element.

In several embodiments provided in the present disclosure, it should be understood that the disclosed devices and methods may be implemented in other ways. The device embodiments described above are merely illustrative. For example, the division of the units is a logical function division, and there may be other division manners in actual implementation. A plurality of units or assemblies may be combined or may be integrated into another system, or some features may be ignored or not performed. In addition, the coupling, direct coupling, or communication connection between the components shown or discussed may be implemented through some interfaces, and the indirect coupling or communication connection between the devices or units may be in an electrical, mechanical or other forms. The units described as separate components may or may not be physically separated, and the components shown as units may or may not be physical units; they may be located in one place, or may be distributed over a plurality of network units; and some or all of the units may be selected according to actual requirements to achieve the aim of the solution of this embodiment. Furthermore, various functional units in the embodiment of the present disclosure may all be integrated into one processing unit, each unit may be separately used as one unit, or two or more units may be integrated into one unit. The above-mentioned integrated unit may be implemented in a form of hardware, or may be implemented in a form of hardware plus a software functional unit.

The above descriptions are embodiments of the present disclosure, but the scope of protection of the present disclosure is not limited thereto. Any of those skilled in the art can easily think of changes or substitutions within the technical scope of the present disclosure, and these changes or substitutions shall all be included within the scope of protection of the present disclosure.

### Industrial applicability

The present disclosure provides a die-cutting method and a die-cutting machine. The die-cutting machine includes an unwinding mechanism, a cutting mechanism, a visual detection system and a winding mechanism which are sequentially arranged in a conveying direction of an electrode sheet, where the visual detection system is configured to collect an image of the current electrode sheet that has been cut; and the cutting mechanism is further configured to cut a next electrode sheet in a first marking mode when a detection result of the current electrode sheet indicates that the current electrode sheet has a defect, the detection result of the current electrode sheet is determined on the basis of the image of the current electrode sheet, a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section. In this way, first, the defect of the electrode sheet is automatically detected, such that compared with manual detection, the cost of detection is reduced, and the detection efficiency and the degree of automation are improved. Secondly, when the visual detection system detects that the electrode sheet has the defect, the cutting mechanism is used to cut an end of the electrode sheet section in time, which achieves asynchronous reset re-cutting. On the one hand, compared with cutting the length of the entire electrode sheet section (that is, synchronous reset re-cutting), the length of an electrode sheet that does not meet standards is shortened, the possibility of electrode sheet waste is reduced, and the aim of saving on electrode sheets is achieved, thereby reducing the manufacturing cost of batteries, and improving the productivity of equipment. On the other hand, compared with adding a separate marking device for marking and/or adding a new detection system before the cutting mechanism for defect detection, the complexity of equipment is lowered while the cost of equipment is reduced. Finally, all electrode sheets that have been cut are wound in time by the winding mechanism, which improves the operational accuracy of the die-cutting machine and can meet the production requirements of high timeliness and high efficiency.

## Claims

1. A die-cutting machine, comprising an unwinding mechanism, a cutting mechanism, a visual detection system and a winding mechanism which are sequentially arranged in a conveying direction of an electrode sheet, wherein:
the unwinding mechanism is configured to release the electrode sheet;
the cutting mechanism is configured to cut the current electrode sheet released by the unwinding mechanism to form tabs;
the visual detection system is configured to collect an image of the current electrode sheet that has been cut;
the cutting mechanism is further configured to cut a next electrode sheet in a first marking mode when a detection result of the current electrode sheet indicates that the current electrode sheet has a defect, the detection result of the current electrode sheet being determined on the basis of the image of the current electrode sheet, wherein a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section; and
the winding mechanism is configured to wind the current electrode sheet.

2. The die-cutting machine according to claim 1, wherein the cutting mechanism is further configured to cut the next electrode sheet in the first marking mode on the basis of a received reset re-cutting signal when the detection result of the current electrode sheet indicates that the current electrode sheet has the defect, wherein the reset re-cutting signal is generated on the basis of the defect of the current electrode sheet.

3. The die-cutting machine according to claim 1 or 2, wherein the cutting mechanism comprises a first cutting device and a second cutting device, wherein:
the first cutting device is configured to cut a first edge of the current electrode sheet to form a tab, and cut a first edge of the next electrode sheet in the first marking mode when a distance between the defect of the current electrode sheet and the first edge of the current electrode sheet meets a distance condition; and
the second cutting device is configured to cut a second edge of the current electrode sheet to form a tab, and cut a second edge of the next electrode sheet in the first marking mode when a distance between the defect of the current electrode sheet and the second edge of the current electrode sheet meets a distance condition, wherein the second edge of the current electrode sheet and the first edge of the current electrode sheet are arranged in a width direction of the electrode sheet.

4. The die-cutting machine according to any one of claims 1 to 3, further comprising a slitting mechanism and a marking mechanism, wherein:
the slitting mechanism is located between the cutting mechanism and the marking mechanism, and is configured to slit the current electrode sheet into a first part and a second part in a length direction of the electrode sheet; and
the marking mechanism is located between the visual detection system and the winding mechanism, and is configured to mark the current electrode sheet in a second marking mode when the detection result of the current electrode sheet indicates that the current electrode sheet has the defect, wherein the second marking mode indicates that a battery electrode sheet section where the current electrode sheet is located is a defective battery electrode sheet section.

5. The die-cutting machine according to claim 4, wherein the slitting mechanism comprises a slitting frame and a cutter located on the slitting frame, wherein:
the cutter on the slitting frame is configured to slit the current electrode sheet into the first part and the second part in the length direction of the electrode sheet.

6. The die-cutting machine according to claim 4 or 5, further comprising an encoding device, wherein:
the encoding device is configured to send at least one output signal to a preset control device, such that the control device controls the marking mechanism to mark the current electrode sheet in the second marking mode on the basis of the at least one output signal.

7. The die-cutting machine according to any one of claims 4 to 6, wherein the marking mechanism comprises a first marking mechanism and a second marking mechanism, and the winding mechanism comprises a first winding mechanism and a second winding mechanism, wherein:
the first marking mechanism is configured to mark the first part of the current electrode sheet in the second marking mode when the defect of the current electrode sheet is located at the first part of the current electrode sheet;
the first winding mechanism is configured to wind the first part of the current electrode sheet;
the second marking mechanism is configured to mark the second part of the current electrode sheet in the second marking mode when the defect of the current electrode sheet is located at the second part of the current electrode sheet; and
the second winding mechanism is configured to wind the second part of the current electrode sheet.

8. The die-cutting machine according to claim 7, wherein the visual detection system comprises a first image collection device, a second image collection device, a third image collection device and a fourth image collection device which are sequentially arranged in the conveying direction of the electrode sheet, and the visual detection system further comprises a fifth image collection device and a sixth image collection device, wherein:
the first image collection device, the second image collection device, the third image collection device and the fourth image collection device are all located between the cutting mechanism and the slitting mechanism, and are configured to collect the image of the current electrode sheet that has been cut;
the fifth image collection device is located between the slitting mechanism and the first marking mechanism, and is configured to collect an image of the first part of the current electrode sheet that has been slit; and
the sixth image collection device is located between the slitting mechanism and the second marking mechanism, and is configured to collect an image of the second part of the current electrode sheet that has been slit.

9. The die-cutting machine according to any one of claims 4 to 8, further comprising at least one of the following: a dust removal mechanism, a deviation correction mechanism, and a tension adjustment mechanism, wherein:
the dust removal mechanism is located between the marking mechanism and the tension adjustment mechanism, and is configured to remove dust on the current electrode sheet that has been cut;
the deviation correction mechanism is located between the unwinding mechanism and the cutting mechanism, and/or located between the cutting mechanism and the slitting mechanism, and is configured to perform deviation correction on the current electrode sheet; and
the tension adjustment mechanism is located between the dust removal mechanism and the winding mechanism, and is configured to adjust winding tension of the winding mechanism.

10. The die-cutting machine according to claim 9, wherein the dust removal mechanism comprises a first dust removal mechanism and a second dust removal mechanism, wherein:
the first dust removal mechanism is located between the marking mechanism and the tension adjustment mechanism, and is configured to remove dust on a first surface of the current electrode sheet that has been cut; and
the second dust removal mechanism is located between the marking mechanism and the tension adjustment mechanism, and is configured to remove dust on a second surface of the current electrode sheet that has been cut.

11. The die-cutting machine according to claim 9 or 10, wherein the deviation correction mechanism comprises a first deviation correction mechanism and a second deviation correction mechanism, wherein:
the first deviation correction mechanism is located between the unwinding mechanism and the cutting mechanism, and is configured to perform deviation correction on the current electrode sheet that is not cut; and
the second deviation correction mechanism is located between the cutting mechanism and the slitting mechanism, and is configured to perform deviation correction on the current electrode sheet that is not slit.

12. A die-cutting method, comprising:
controlling a visual detection system of a die-cutting machine to collect an image of a current electrode sheet, wherein the die-cutting machine comprises an unwinding mechanism, a cutting mechanism, the visual detection system and a winding mechanism which are sequentially arranged in a conveying direction of the electrode sheet;
determining a detection result of the current electrode sheet on the basis of the image of the current electrode sheet; and
controlling the cutting mechanism to cut a next electrode sheet in a first marking mode when the detection result of the current electrode sheet indicates that the current electrode sheet has a defect, wherein a cutting position corresponding to the next electrode sheet is used as an end position of a current battery electrode sheet section and a starting position of a next battery electrode sheet section, and the length between the starting position of the next battery electrode sheet section and a starting position of the current battery electrode sheet section is less than the length of one battery electrode sheet section.

13. The die-cutting method according to claim 12, wherein:
the visual detection system comprises a plurality of image collection devices, and the image of the current electrode sheet comprises an image of the current electrode sheet collected by each of the image collection devices; and
the determining a detection result of the current electrode sheet on the basis of the image of the current electrode sheet comprises:
determining the detection result of the current electrode sheet on the basis of the image of the current electrode sheet collected by each of the image collection devices.

14. The die-cutting method according to claim 12 or 13, wherein the controlling the cutting mechanism to cut a next electrode sheet in a first marking mode comprises:
generating a reset re-cutting signal on the basis of the defect of the current electrode sheet; and
sending the reset re-cutting signal to the cutting mechanism, such that the cutting mechanism cuts the next electrode sheet in the first marking mode on the basis of the reset re-cutting signal.

15. The die-cutting method according to claim 14, wherein the generating a reset re-cutting signal on the basis of the defect of the current electrode sheet comprises:
determining a target processing mode corresponding to the defect of the current electrode sheet by using a preset correspondence, wherein the correspondence indicates a relationship between at least one defect and at least one processing mode, and the at least one processing mode comprises at least one of the following: alarm processing, shutdown processing, marking processing, and re-cutting processing; and
generating the reset re-cutting signal when the target processing mode comprises the re-cutting processing.

16. The die-cutting method according to claim 15, further comprising:
displaying a configuration interface, wherein the configuration interface comprises a configuration area, and the configuration area is used to configure the relationship between the at least one defect and the at least one processing mode; and
determining the correspondence in response to a configuration operation performed in the configuration area.

17. The die-cutting method according to any one of claims 14 to 16, wherein the sending the reset re-cutting signal to the cutting mechanism, such that the cutting mechanism cuts the next electrode sheet in the first marking mode on the basis of the reset re-cutting signal, comprises at least one of the following:
when a distance between the defect of the current electrode sheet and a first edge of the current electrode sheet meets a distance condition, sending the reset re-cutting signal to a first cutting device in the cutting mechanism, such that the first cutting device cuts a first edge of the next electrode sheet in the first marking mode on the basis of the reset re-cutting signal; and
when a distance between the defect of the current electrode sheet and a second edge of the current electrode sheet meets a distance condition, sending the reset re-cutting signal to a second cutting device in the cutting mechanism, such that the second cutting device cuts a second edge of the next electrode sheet in the first marking mode on the basis of the reset re-cutting signal, wherein the second edge of the current electrode sheet and the first edge of the current electrode sheet are arranged in a width direction of the electrode sheet.

18. The die-cutting method according to any one of claims 12 to 17, further comprising:
controlling a marking mechanism to mark the current electrode sheet in a second marking mode on the basis of the defect of the current electrode sheet, wherein the marking mechanism is located between the visual detection system and the winding mechanism, and the second marking mode indicates that a battery electrode sheet section where the current electrode sheet is located is a defective battery electrode sheet section.

19. The die-cutting method according to claim 18, wherein the controlling a marking mechanism to mark the current electrode sheet in a second marking mode on the basis of the defect of the current electrode sheet comprises:
determining a target processing mode corresponding to the defect of the current electrode sheet by using a preset correspondence, wherein the correspondence indicates a relationship between at least one defect and at least one processing mode, and the at least one processing mode comprises at least one of the following: alarm processing, shutdown processing, marking processing, and re-cutting processing; and
when the target processing mode comprises the marking processing, controlling the marking mechanism to mark the current electrode sheet in the second marking mode.

20. The die-cutting method according to claim 19, wherein the controlling the marking mechanism to mark the current electrode sheet in the second marking mode comprises at least one of the following:
when the defect of the current electrode sheet is located at a first part of the current electrode sheet, controlling a first marking mechanism in the marking mechanism to mark the first part of the current electrode sheet in the second marking mode; and
when the defect of the current electrode sheet is located at a second part of the current electrode sheet, controlling a second marking mechanism in the marking mechanism to mark the second part of the current electrode sheet in the second marking mode,
wherein the first part of the current electrode sheet and the second part of the current electrode sheet are obtained by slitting the current electrode sheet in a length direction of the electrode sheet via a slitting mechanism of the die-cutting machine, and the slitting mechanism is located between the cutting mechanism and the marking mechanism.
